(19) Europäisches Patentamt / European Patent Office / Office européen des brevets

(11) **EP 2 724 833 A1**

(12) **EUROPEAN PATENT APPLICATION**
published in accordance with Art. 153(4) EPC

(43) Date of publication:
**30.04.2014 Bulletin 2014/18**

(51) Int Cl.:
**B29C 33/42** *(2006.01)*  **B29C 45/37** *(2006.01)*

(21) Application number: **12802615.0**

(22) Date of filing: **29.02.2012**

(86) International application number:
**PCT/JP2012/055133**

(87) International publication number:
**WO 2012/176502 (27.12.2012 Gazette 2012/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.06.2011 JP 2011140426**
**16.12.2011 JP 2011275560**

(71) Applicant: **Nissan Motor Co., Ltd**
**Yokohama-shi, Kanagawa 221-0023 (JP)**

(72) Inventors:
• **TANAKA, Hiroyuki**
**Kanagawa 243-0123 (JP)**

• **SAKATA, Sumio**
**Kanagawa 243-0123 (JP)**
• **MOTOFUJI, Akane**
**Kanagawa 243-0123 (JP)**
• **OKAZAKI, Kazuya**
**Kanagawa 243-0123 (JP)**
• **TOYOFUKU, Fumi**
**Kanagawa 243-0123 (JP)**
• **TAMURAYA, Makoto**
**Kanagawa 243-0123 (JP)**

(74) Representative: **Hoefer & Partner**
**Pilgersheimer Straße 20**
**81543 München (DE)**

(54) **SURFACE STRUCTURE OF ARTICLE**

(57) Irregularities are formed on the surface of an article. At the top of each protrusion of the irregularities, fine irregularities finer than the irregularities are formed. The irregularities are formed so that, in a unit area of the surface of the article touched by a human finger, a ratio of a contact area between the finger and the article is in the range of 35% to 90%. It is preferable to form the irregularities so that the ratio of a contact area between the finger and the article is in the range of 45% to 80%.

FIG. 1

EP 2 724 833 A1

**Description**

TECHNICAL FIELD

The present invention relates to a surface structure of an article involving irregularities formed on the surface of the article.

BACKGROUND ART

The surface of a resin molded article is usually provided with, in view of design and scratch resistance, irregularities formed by engraving. Such a resin molded article having the engraved irregularities and made of hard material frequently provides a person who touches the article with an unpleasant tactile sensation such as "hard", "rough", "granular", or "rugged". It is therefore required for articles such as car interior articles to provide pleasant tactile sensations.
For this, Japanese Unexamined Patent Application Publication No. 2000-229356, for example, determines roughness of engraving on the surface of an article according to hardness of a material of the article so that the article may provide a pleasant tactile sensation.

SUMMARY OF INVENTION

Problems to be Solved by Invention

As mentioned above, the surface of a resin molded article tends to provide a person who touches the article with an unpleasant tactile sensation. The resin molded article, therefore, is required to provide a pleasant feeling such as "soft", "moist", or "smooth".
The present invention is capable of providing the surface of an article with a more pleasant feeling.

Means to Solve Problem

The present invention is characterized in that a contact area between a human skin and the surface of an article having irregularities as being in contact with each other shows a ratio in the range of 35% to 90% with respect to a contact area between the human skin and the surface of an article.

BRIEF DESCRIPTION OF DRAWINGS

Figure 1 is a sectional view illustrating a finger in contact with the surface of an article according to an embodiment of the present invention.
Figure 2 is a plan view of fine irregularities formed at the top of protrusions of irregularities on the surface of the article of Fig. 1.
Figure 3(a) is a sectional view taken along A-A of Fig. 2, illustrating fine protrusions at regular pitches and Fig. 3(b) is a sectional view taken along B-B of Fig. 2, illustrating fine protrusions at irregular pitches.
Figure 4 is a schematic view for calculating a contact ratio at the surface of an article having irregularities.
Figure 5 is a sectional view illustrating a concrete example of the surface structure of Fig. 1.
Figure 6 is a graph illustrating a relationship between a contact ratio and a "moist sensation" as an indicator of "pleasantness" felt when touching an article. The highest score for the moist sensation is evaluated and depicted as 5.0.
Figure 7 is a sectional view illustrating an article having a contact ratio of 48%.
Figure 8(a) is a graph illustrating a relationship between a contact ratio and irregularities on the surface of an article and Fig. 8(b) is a graph illustrating a relationship between a contact ratio and fine irregularities on the surface of an article.

MODE OF IMPLEMENTING INVENTION

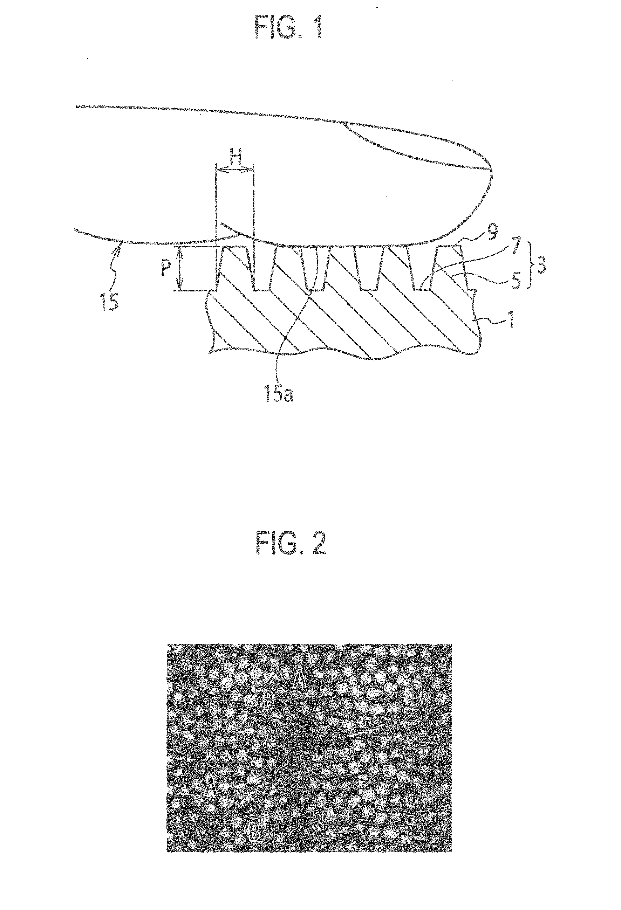

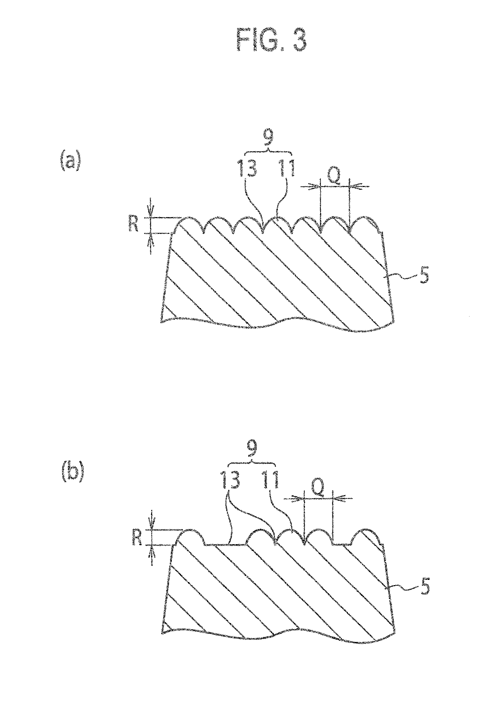

Embodiments of the present invention will be explained with reference to the drawings.
A first embodiment of the present invention schematically illustrated in Fig. 1 forms irregularities 3 by engraving (graining) at the surface of a resin-made article, for example, a car interior part such as a console box, a door, or an instrument panel. The irregularities 3 include protrusions 5 and valleys 7. The top of the protrusion 5 is substantially flat, and at the flat top, there are formed fine irregularities 9 that are finer than the irregularities 3 and have shorter pitches. As illustrated in the enlarged view of Fig. 2, the fine irregularities 9 include fine protrusions 11 that are smaller than the protrusions 5 of the irregularities 3 and fine valleys 13 that are smaller than the valleys 7 of the irregularities 3. The fine irregularities 9 being finer than the irregularities 3 means at least that the width Q and height R (Fig. 3) of the fine protrusion 11 of the fine irregularities 9 are smaller than the width H and height P (Fig. 1) of the protrusion 5 of the irregularities 3.

The valley 7 of the irregularities 3 illustrated in Fig. 1 has a depth P (the height of the protrusion 5) of 70 micrometers or more. The depth P is equal to a distance between the top of the protrusion 5 and the bottom of the valley 7. As illustrated in Figs. 3(a) and 3(b), the width Q of the fine protrusion 11 of the fine irregularities 9 is about 30 micrometers and the height R of the fine protrusion 11 of the fine irregularities is about 15 micrometers. Although the shape of the fine protrusion is basically circular in a plan view (seen from above in Fig. 3), it may be oval or elliptic instead of circle (true circle).

In such a case, a part having a largest dimension (a part corresponding to a major axis in the case of an oval) has a width Q of 30 micrometers. The width Q of the fine protrusion 11 in Fig. 3 is a distance between rises from the bottoms of the fine valleys 13 adjacent to the fine protrusion 11. The width H of the protrusion 5 in Fig. 1 is a distance between rises from the bottoms of the valleys 7 adjacent to the protrusion 5.

The article 1 mentioned above may be made of PP (polypropylene), ABS (acrylonitrile-butadiene-styrene), AES (acrylonitrile-ethylene-styrene), ASA (acrylonitrile-styrene-acrylate), POM (polyacetal), PA (polyamide), PC (polycarbonate), or the like.

The article 1 is formed from such thermoplastic resin by injection molding.

According to the present embodiment, the article 1 is provided with a surface structure whose contact ratio is within the range of 35% to 90%. The contact ratio is a ratio of a contact area between a human finger 15 and the article 1 when an inner surface 15a of the finger 15 touches the surface of the article 1 having the irregularities 3 as illustrated in Fig. 1 to a contact area between the finger 15 and a flat surface having no irregularities when the inner surface 15a of the finger 15 touches the flat surface in the same manner.

In other words, the contact ratio S is calculated according to the below-mentioned expression in which A is a contact area between the finger 15 and the article 1 in an unit area when the inner surface 15a of the finger 15 and the surface of the article 1 are in contact with each other, wherein the irregularities 3 are formed as illustrated in Fig. 1 and B is a noncontact area between the finger 15 and the article 1 in the unit area.

$$S = [A / (A + B)] \times 100 = 35\% \text{ to } 90\%$$

It is preferable that the contact ratio S is in the range of 45% to 80%, to improve tactile sensation. Tactile sensation with respect to the finger is based on sensory information including pressure, pain, and heat and is considered to be related to the surface shape of the finger (including the fingerprint), the kind and distribution of sensory receptors of the finger, contact conditions between the article and the finger (including spatial and temporal changes in pressure), and the like.

If the inner surface 15a of the finger 15 is strongly pressed to the article 1, the contact ratio S increases. When the finger 15 touches the surface of the article 1, it is generally said that a force of 200 gram-weight (1.96 N) acts between them. According to the present embodiment, the contact ratio is based on an assumption that a force of 200 gram-weight acts when the surface of the article 1 is touched.

The contact ratio S mentioned above is expressible with the below-mentioned expression in which h1, h2, h3, ..., hn are the widths of the protrusions 5 in a section of length H on the article having the irregularities when the inner surface of the finger and the top and side faces of the protrusions 5 in the section are in touch with each other under applying a pressing force of 200 gram-weight:

$$S = (h1 + h2 + h3 + ... + hn) / H.$$

According to the embodiment, the contact ratio tends to unnecessarily increase if only the irregularities 3 without the fine irregularities 9 are formed on the surface of the article. In this case, the width of each valley 7 must be widened to reduce the contact ratio. This results in increasing a rough feeling and deteriorates appearance. Forming the fine irregularities 9 realizes a specified contact ratio S and improves appearance.

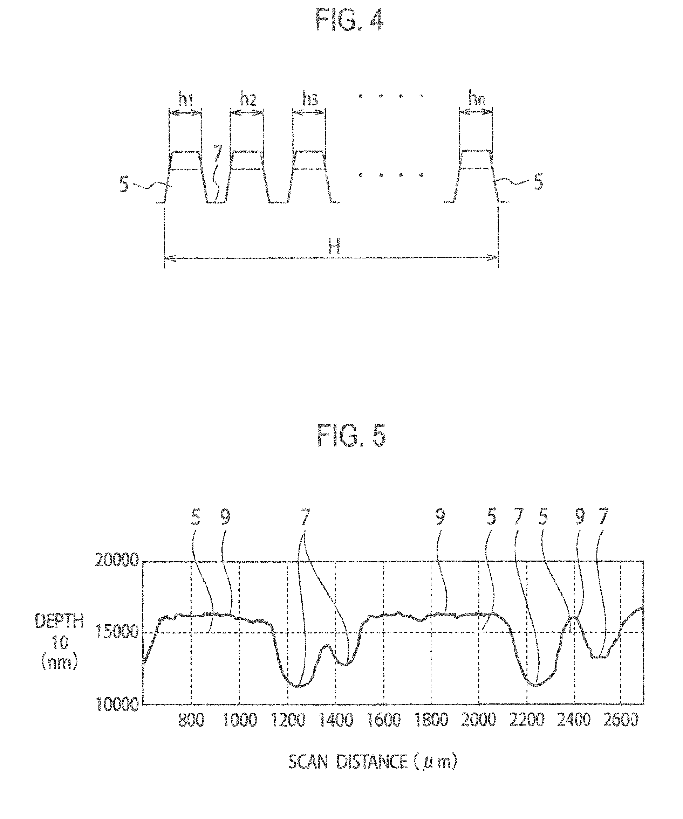

Figure 5 is a sectional view of a practical example of the surface structure of the article 1, illustrating a distribution of depths [nm] with respect to scan distances [$\mu$m] in a surface direction of the article. According to Fig. 5, the tops of the fine protrusions 11 of the fine irregularities 9 formed on the protrusions 5, the protrusions 5 of the irregularities 3, and the vicinities thereof are regions the finger 15 contacts when the inner surface 15a of the finger 15 is put on the surface of the article 1.

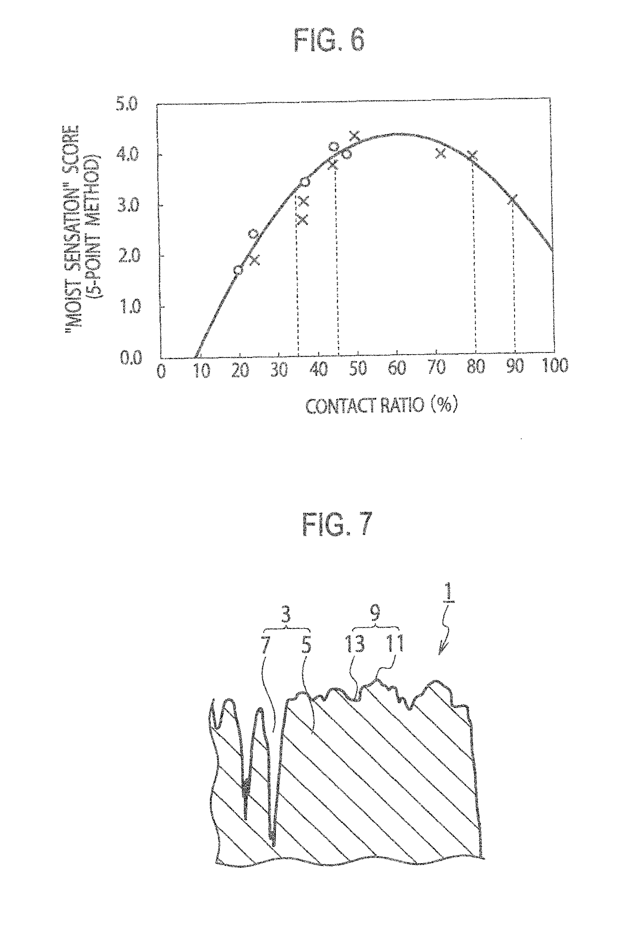

Figure 6 illustrates a relationship between the contact ratio S and a "moist sensation" as an indicator of "pleasantness" when touching the surface of the article 1 with the inner surface 15a of the finger 15, the highest score for the moist sensation being 5. In Fig. 6, a circle mark corresponds to the case with the fine irregularities 9 formed on the protrusions 5 of the irregularities 3 and a cross mark corresponds to the case with only the irregularities 3 without the fine irregularities 9.

Accordingly, a standard score of 3 or over for the "'moist sensation" is obtained when the contact ratio is within the range of about 35% to 90%.

Namely, the contact ratio of lower than 35% or higher than 90% hardly provides "moist sensation". If the contact ratio is lower than 35%, an unpleasant tactile sensation such as "hard", "rough", "granular", or "rugged" will be felt. If the contact ratio exceeds 90%, it will become a flatter surface to excessively increase frictional force. This results in causing an unpleasant tactile sensation such as a resistive sensation.

In Fig. 6, a contact ratio in the range of 45% to 80% is more preferable to improve "moist sensation".

Figure 7 is a sectional view illustrating an example of an article (car part) 1 having a contact ratio of 48%. The surface of this article 1 includes fine irregularities 9 formed on protrusions 5 of irregularities 3. The fine irregularities 9 include fine protrusions 11 and fine valleys 13.

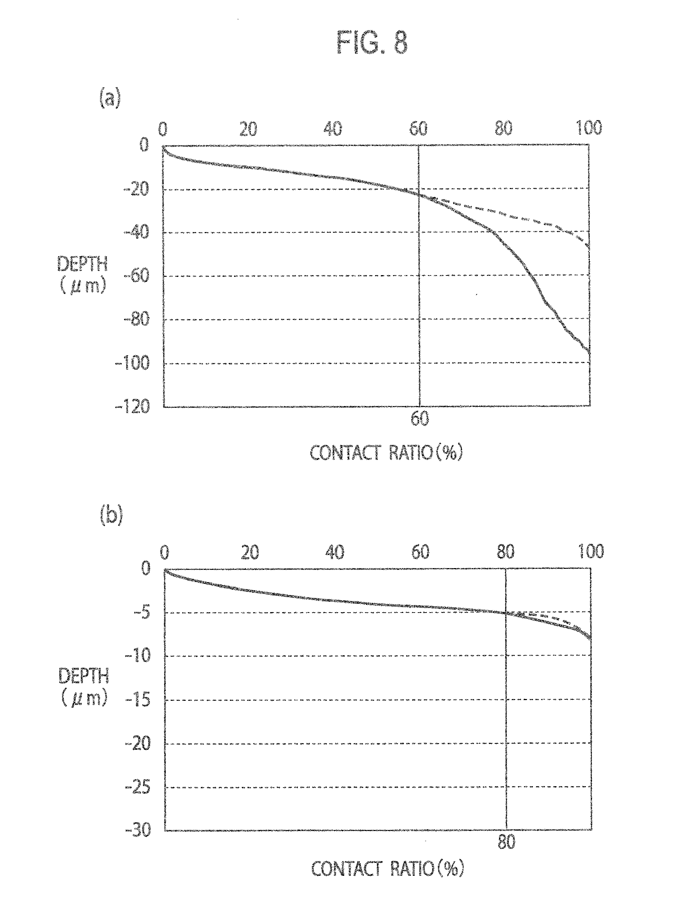

Figure 8(a) illustrates contact ratios for the irregularities 3 without the fine irregularities 9 and Figure 8(b) illustrates contact ratios for the fine irregularities 9 formed on the protrusions 5 of the irregularities 3. In Fig. 8, a contact ratio of 60% is set for the irregularities 3 and a contact ratio of 80% for the fine irregularities 9. Accordingly, a contact ratio for the surface of the article having the fine irregularities 9 on the irregularities 3 as illustrated in Fig. 7 is 48% (60% x 80%).

In Fig. 8, a continuous line corresponds to the contact ratio $S = (h1 + h2 + h3 + .., + hn) / H$ as illustrated in Fig. 4.

To improve "moist sensation", frictional force at the surface of an article must be increased. If the frictional force is excessively increased, resistive sensation will be felt. Accordingly, the frictional force must be within a proper range. The frictional force [N] is expressed as "Pressure [Pa] x Frictional coefficient x Contact area [$m^2$]". It is possible to make input, i.e., pressure constant as mentioned above and the frictional coefficient may also be made constant by using the same material. Then, it is possible to estimate the frictional force according to the contact area of a finger at the surface of an article. The area of the inner surface of a finger is assumed to be constant. Accordingly, by measuring the contact area where the finger is actually in contact with the irregularities of the surface of the article, the contact area is usable as the contact ratio.

As mentioned above, the embodiment forms irregularities at the surface of an article to make a contact ratio of a finger touching the article within the range of 35% to 90%. With this, a person who touches the article feels a pleasant tactile sensation of "soft", "moist", or "smooth".

If the irregularities at the surface of the article are so formed that the contact ratio of the finger touching the article is in the range of 45% to 80%, a person who touches the article feels a more pleasant tactile sensation of "soft", "moist", or "smooth".

According to the embodiment, the irregularities 3 on the surface of an article include the protrusions 5 and valleys 7. Formed on the protrusions 5 are the fine irregularities 9 whose pitches are finer than those of the irregularities 3 having the protrusions 5 and valleys 7. This configuration allows the contact ratio to be easily adjusted and improves appearance.

According to the embodiment, the depth P of the irregularities 3 is 70 micrometers or deeper. As a result, the irregularities 3 are clearly shaped to improve beautiful appearance. When the irregularities are made by engraving and if the valleys are shallower than 70 micrometers, the irregularities are thin and unclear to deteriorate appearance.

According to the embodiment, the width of each fine protrusion 11 of the fine irregularities 9 is 30 micrometers. This effectively improves, when a person touches the article, a pleasant tactile sensation of "soft", "moist", or "smooth".

At this time, the embodiment sets the height of the fine protrusions 11 of the fine irregularities 9 to 15 micrometers. This further improves, when a person touches the article, a pleasant tactile sensation of "soft", "moist", or "smooth" like an epidermis material.

Even if the fine protrusions 11 each of 30 micrometers wide are formed on a surface having no protrusions 5, i.e., no irregularities 3, the fine protrusions 11 will effectively improve the pleasant tactile sensation of "soft", "moist", 1 or "smooth" like an epidermis material.

According to the embodiment, the article 1 is formed from thermoplastic resin by injection molding. Accordingly, the article 1 having the irregularities 3 at the surface thereof is easily manufacturable.

According to the present invention, the surface of an article is provided with irregularities so that a contact ratio of an area where a human skin touches the article falls in the range of 35% to 90%. As a result, when a person touches the surface of the article, he or she may feel a pleasant tactile sensation of "soft", "moist", or "smooth" like an epidermis material.

(United States Designation)

In connection with United States designation, this international patent application claims the benefit of priority under 35 U.S.C. 119(a) to Japanese Patent Application No. 2011-275560 filed on December 16, 2011 and Japanese Patent Application No. 2011-140426 filed on June 24, 2011, the disclosed contents thereof being cited herein.

**Claims**

1. A surface structure of an article having irregularities on a surface of the article, **characterized in that** a ratio of a contact area between a human skin and a surface of a part of the article having the irregularities as being in contact with each other to a contact area between the human skin and the surface of the part is in the range of 35% to 90%.

2. The surface structure of an article according to claim 1, **characterized in that** the ratio is in the range of 45% to 80%.

3. The surface structure of an article according to claim 1 or 2, **characterized in that** the irregularities include protrusions and valleys and the top of each protrusion is provided with fine irregularities whose pitches are finer than those of the irregularities.

4. The surface structure of an article according to any one of claims 1 to 3, **characterized in that** the depth of the irregularities is equal to or larger than 70 micrometers.

5. The surface structure of an article according to claim 3, **characterized in that** the width of each fine protrusion of the fine irregularities is 30 micrometers.

6. The surface structure of an article according to claim 3 or 5, **characterized in that** the height of the fine protrusions of the fine irregularities is 15 micrometers.

FIG. 1

FIG. 2

# FIG. 3

(a)

(b)

FIG. 4

FIG. 5

SCAN DISTANCE ($\mu$m)

## FIG. 6

## FIG. 7

## FIG. 8

(a)

(b)

| | INTERNATIONAL SEARCH REPORT | International application No. |
|---|---|---|
| | | PCT/JP2012/055133 |

**A. CLASSIFICATION OF SUBJECT MATTER**
*B29C33/42*(2006.01)i, *B29C45/37*(2006.01)i

According to International Patent Classification (IPC) or to both national classification and IPC

**B. FIELDS SEARCHED**

Minimum documentation searched (classification system followed by classification symbols)
B29C33/00-33/76, B29C45/00-45/84

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 5-92484 A (Dainippon Printing Co., Ltd.), 16 April 1993 (16.04.1993), entire text (Family: none) | 1-6 |
| X | JP 9-314569 A (Tohoku Munekata Co., Ltd.), 09 December 1997 (09.12.1997), entire text (Family: none) | 1-6 |

| ☒ Further documents are listed in the continuation of Box C. | ☐ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 18 May, 2012 (18.05.12) | 29 May, 2012 (29.05.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2012/055133

C (Continuation).   DOCUMENTS CONSIDERED TO BE RELEVANT

| Category* | Citation of document, with indication, where appropriate, of the relevant passages | Relevant to claim No. |
|---|---|---|
| A | Microfilm of the specification and drawings annexed to the request of Japanese Utility Model Application No. 92680/1984(Laid-open No. 8917/1986) (Dainippon Printing Co., Ltd.), 20 January 1986 (20.01.1986), entire text (Family: none) | 1-6 |
| A | JP 9-285305 A  (Showa Rubber Co., Ltd.), 04 November 1997 (04.11.1997), entire text (Family: none) | 1-6 |
| A | JP 11-320627 A  (Tohoku Munekata Co., Ltd.), 24 November 1999 (24.11.1999), entire text (Family: none) | 1-6 |
| A | JP 2009-91794 A  (Toli Corp.), 30 April 2009 (30.04.2009), entire text (Family: none) | 1-6 |
| A | JP 11-198595 A  (Dainippon Printing Co., Ltd.), 27 July 1999 (27.07.1999), entire text (Family: none) | 1-6 |
| A | JP 2010-89359 A  (Kaneka Corp.), 22 April 2010 (22.04.2010), entire text (Family: none) | 1-6 |
| A | JP 2001-306200 A  (Fuji Xerox Co., Ltd.), 02 November 2001 (02.11.2001), paragraph [0049]; fig. 7 (Family: none) | 1-6 |
| A | JP 2007-333522 A  (Toyobo Co., Ltd.), 27 December 2007 (27.12.2007), entire text (Family: none) | 1-6 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000229356 A
- JP 2011275560 A
- JP 2011140426 A